# EUROPÄISCHE PATENTSCHRIFT

(11) **EP 3 401 353 B1**
(45) Veröffentlichungstag und Bekanntmachung des Hinweises auf die Patenterteilung: **23.06.2021**
(21) Anmeldenummer: 17169876.4
(22) Anmeldetag: 08.05.2017
(51) Int. Cl.: C08G 77/06, C08G 77/10, C08L 83/04, C08G 77/18

(54) **MISCHUNGEN ZYKLISCHER-VERZWEIGTER SILOXANE VOM D/T-TYP UND DEREN FOLGEPRODUKTE**
MIXTURES OF CYCLIC BRANCHED D/T-TYPE SILOXANES AND THEIR ENSUING PRODUCTS
MÉLANGES DE SILOXANES RAMIFIÉS-CYCLIQUES DE TYPE D/T ET LEURS DÉRIVÉS

(43) Veröffentlichungstag der Anmeldung: 14.11.2018
(73) Patentinhaber: Evonik Operations GmbH, 45128 Essen (DE)
(72) Erfinder: KNOTT, Wilfried, 45355 Essen (DE); DUDZIK, Horst, 45326 Essen (DE)
(74) Vertreter: Evonik Patent Association

(56) Entgegenhaltungen:
- US-A1- 2010 239 771
- US-A1- 2011 076 409

## Beschreibung

Die Erfindung betrifft ein Verfahren zur Herstellung zyklisch-verzweigter Siloxane vom D/T-Typ, die zyklisch-verzweigten Siloxane des D/T-Typs selbst sowie die Verfahren zur Verarbeitung dieser Siloxane zu funktionalisierten verzweigten Siloxanen und / oder verzweigten Siliconölen.

Als Referenz zu der im Rahmen dieser Schrift verwendeten M-, D-, T-, Q-Nomenklatur zur Beschreibung der Baueinheiten von Organopolysiloxanen sei W. Noll, Chemie und Technologie der Silicone, Verlag Chemie GmbH, Weinheim (1960), Seite 2 ff. angeführt.

Bei der Herstellung organomodifizierter Siloxane, insbesondere verzweigter funktionstragender Siloxane sieht man sich häufig der Schwierigkeit gegenüber, dass konkurrierende Prozesse gleichzeitig in der Reaktionsmatrix stattfinden, die die Qualität des angestrebten Produktes negativ beeinflussen können.

Kondensation und Äquilibrierung zählen zu diesen konkurrierenden Prozessen, die je nach synthetischer Fragestellung gesondert zu berücksichtigen sind. Eine große Herausforderung stellt die gleichmäßige Verteilung von Verzweigungsstellen entlang einer Siloxankette dar (Vermeidung von T-strukturierten Domänen). Wie man der Literatur entlehnen kann, ist das Aufbrechen homologer, aus T-Einheiten bestehender Siloxanketten gerade unter Säurekatalyse schwierig und somit bei Präsenz empfindlicher funktioneller Gruppen de facto nicht zu leisten. Zum Reaktivitätsverhalten von M-, D- und T-Einheiten sei auf M.A. Brook, "Silicon in Organic, Organometallic and Polymer Chemistry", John Wiley & Sons, Inc., New York (2000), S. 264 ff. verwiesen.

Insbesondere bei der Herstellung von reaktiven SiH-Gruppen tragenden, verzweigten Siloxanen sind darum stets erhebliche Anstrengungen zu unternehmen, die Forderung nach einer möglichst statistischen Gleichverteilung von Siloxaneinheiten mit der Forderung nach dem weitestgehenden Erhalt des wertvollen, am Silizium gebundenen Wasserstoffs in Einklang zu bringen.

Polyorganosiloxane werden nach dem Stand der Technik durch Hydrolyse und Kondensation ausgehend von gemischt substituierten Methyl-chlor-wasserstoff-silanen hergestellt. Eine direkte hydrolytische Kondensation von wasserstoffhaltigen Silanen, wie z. B. Dimethylmonochlorsilan oder Methyldichlorsilan, wird beispielsweise in der US 2,758,124 beschrieben. Man trennt darin die sich bei der Hydrolyse separierende Siloxanphase von der salzsauren Wasserphase ab. Da dieser Prozess anfällig für Vergelungen der Wasserstoffsiloxane ist, beschreibt die DE 11 25 180 ein verbessertes Verfahren unter Nutzung einer organischen Hilfsphase, bei dem das gebildete Wasserstoffsiloxan in einem organischen Lösungsmittel als separate Phase gelöst vorliegt und nach Abtrennung von der sauren Wasserphase und Abdestillation des Lösungsmittels beständig gegen Vergelung ist. Eine weitere Prozessverbesserung im Hinblick auf einen minimierten Lösungsmitteleinsatz beschreibt die EP 0 967 236 und führt in ihrer Lehre aus, vorerst nur geringe Wassermengen in der hydrolytischen Kondensation der Organochlorsilane einzusetzen, so dass im ersten Schritt Chlorwasserstoff gasförmig ausgetrieben wird und als Wertstoff unmittelbar weiteren Verwendungszwecken zugeführt werden kann.

Verzweigte organomodifizierte Polysiloxane können durch eine Vielzahl an Strukturen beschrieben werden. Generell muss unterschieden werden zwischen einer Verzweigung oder Vernetzung, die über die organischen Substituenten eingebracht wird und einer Verzweigung oder Vernetzung innerhalb der Siliconkette. Organische Vernetzer zur Verknüpfung SiH-Gruppen tragender Siloxangerüste sind beispielsweise a, ω-ungesättigte Diolefine, Divinyl-Verbindungen oder Diallyl-Verbindungen, wie beispielsweise in US 6,730,749 oder EP 0 381 318 beschrieben. Diese der Äquilibrierung nachgeschaltete Vernetzung durch Platin-katalysierte Hydrosilylierung bedeutet einen zusätzlichen Verfahrensschritt, bei dem sowohl intramolekulare Verknüpfungen als auch intermolekulare Verknüpfungen stattfinden können. Die Produkteigenschaften werden zudem stark beeinflusst von den unterschiedlichen Reaktivitäten der zu Peroxidbildung neigenden, niedermolekularen organischen, difunktionellen Verbindungen.

Eine multiple Vernetzung des Siliconblocks eines organomodifizierten Polysiloxans mit dem organischen Blockcopolymer kann auf verschiedene Arten erfolgen. Die EP 0 675 151 beschreibt die Herstellung eines Polyethersiloxans durch Hydrosilylierung eines Wasserstoffsiloxans mit einem Unterschuss an hydroxyfunktionellem Allylpolyether, bei der nicht umgesetzte SiH-Funktionen unter Zugabe von Natriummethylat mit den Hydroxylgruppen der Polyethersubstituenten über eine SiOC-Bindung verknüpft werden. Der Molmassenaufbau führt zu einer breiten Streuung der Produkteigenschaften, wie z. B. der Viskosität. Einen ähnlichen Ansatz zum Aufbau verzweigter Systeme beschreibt die US 4,631,208, bei der hydroxyfunktionelle Polyethersiloxane mittels Trialkoxysilanen quervernetzt werden. Beide Methoden führen zu einer intermolekularen Vernetzung der Polyethersiloxane mit sowohl schwierig zu steuerndem Molmassenaufbau als auch damit einhergehenden, unvorhersehbaren Viskositätsanstiegen. Man erhält bei Verfolgung der vorgenannten Methoden keine Verzweigung innerhalb des Siloxanteils bei konstanter Molekularmasse, sondern eine Quervernetzung zu makromolekularen Multiblockcopolymeren.

Eine Verzweigung innerhalb der Siloxankette muss daher bereits bei der Herstellung des Wasserstoffsiloxans erfolgen, um die beschriebenen Nachteile der Quervernetzung zu umgehen. Verzweigungen innerhalb der Siloxankette bedingen den synthetischen Einbau von trifunktionellen Silanen, wie z. B. Trichlorsilanen oder Trialkoxysilanen.

Wie dem Fachmann bekannt ist, steigt die Hydrolysegeschwindigkeit der Organochlorsilane in folgender Reihe (C. Eaborn, Organosilicon Compounds, Butterworths Scientific Publications, London I960, S. 179)
SiCl₄ > RSiCl₃ » R₂SiCl₂ > R₃SiCl.

Daher besteht bei den Hydrolyse und Kondensationsreaktionen von Trichlorsilanen eine erhöhte Tendenz zur Bildung hochvernetzter Gele im Vergleich zu den langsamer verlaufenden Hydrolyse und Kondensationsreaktionen von difunktionellen und monofunktionellen Organochlorsilanen. Die etablierten Verfahren zur Hydrolyse und Kondensation von Dichlor- und Monochlorsilanen sind daher nicht ohne weiteres auf Trichlorsilane übertragbar, sondern es müssen Umwege über Mehrstufenprozesse beschritten werden.

Aufbauend auf dieser Erkenntnis, muss auch die Herstellung von einfach verzweigten Wasserstoffsiloxanen durch Einbau von maximal einem trifunktionellen Monomer pro Siloxankette gemäß dem Stand der Technik zweistufig durchgeführt werden. In einem ersten Schritt wird ein trifunktionelles, niedermolekulares Wasserstoffsiloxan durch Hydrolyse und Kondensation aus 1, 1, 3, 3-Tetramethyldisiloxan und Methyltriethoxysilan hergestellt, wie z.B. die DE 37 16 372 lehrt. Erst in einem zweiten Schritt kann dann eine Äquilibrierung mit cyclischen Siloxanen zu höheren Molgewichten erfolgen, wie die DE 10 2005 004676 ausführt. Zur weiteren Umsetzung - und daher erst in einem dritten Schritt - kann das so hergestellte, einfach verzweigte Wasserstoffsiloxan nach den an sich bekannten Methoden zur Funktionalisierung SiH-Gruppen aufweisender Siloxanverbindungen mit organischen Substituenten versehen werden.

Zur Synthese mehrfach verzweigter Wasserstoffsiloxane, die per Definition mehr als ein trifunktionelles Monomer pro Siloxankette aufweisen, finden sich im Stand der Technik ebenfalls zweistufige Synthesen. Prinzipiell hat man die Möglichkeit von Wasserstoffsiloxanen auszugehen und die SiH-Funktionen unter Zugabe von Wasser und Edelmetallkatalysator dehydrogenativ in Silanole umzuwandeln, die anschließend wiederum mit Wasserstoffsiloxanen kondensiert werden. Beschrieben wird diese Vorgehensweise in US 6,790,451 und in EP 1 717 260. Abgesehen von den Kosten der Edelmetallkatalyse erschwert die schlechte Lagerstabilität der zu Autokondensation neigenden Silanole eine reproduzierbare, kontrollierte Prozessführung.

Eine weitere, in US 6,790,451 beschriebene Möglichkeit besteht in der Herstellung eines Copolymerisats aus Trichlormethylsilan oder Trialkoxymethylsilan mit Hexamethyldisiloxan oder Trimethylchlorsilan, dort auch MT-Polymer genannt, welches in einem zweiten Schritt gemeinsam mit einem Polydimethyl (methylhydrogen) siloxancopolymer äquilibriert wird. Die Herstellung solcher MT-Polymere erfordert den Einsatz starker Basen oder starker Säuren teils in Kombination mit hohen Reaktionstemperaturen und bringt Präpolymere derart hoher Viskosität hervor, dass deren Neutralisation beträchtlich erschwert und somit die Weiterverarbeitung zu Endprodukten konstanter Zusammensetzung und Qualität signifikant eingeschränkt ist.

Gemäß EP 0 675 151 wird zuerst die Hydrolyse und Kondensation des SiH-freien, verzweigten Siliconpolymers in Xylol derartig durchgeführt, dass man mit einem großen Überschuss an Hexamethyldisiloxan den Endverschluss des Vorkondensates durchführt und im zweiten Schritt die Äquilibrierung mit Methylhydrogenpolysiloxan zu einem verzweigten Wasserstoffsiloxan vornimmt (Herstellvorschrift 6, ibid.). Alternativ stellt die Lehre der EP 0 675 151 auf eine Fahrweise zur Herstellung Nicht SiH-funktioneller verzweigter Siloxane ab, die lediglich eine Teilkondensation des eingesetzten Methyltrichlorsilans beinhaltet (Herstellvorschrift 7, ibid.). Diese beiden Strategien des Vorgehens adressieren jedoch das Bedürfnis nach einer universell nutzbaren Herstellmethode für verzweigte Siloxane nicht.

Die WO2009065644 A1 lehrt ein Verfahren zur Herstellung von verzweigten SiH-funktionellen Siloxanen durch Umsetzung einer Mischung enthaltend
a) ein oder mehrere SiH-funktionelle Siloxane, b) ein oder mehrere SiH-Funktions-freie Siloxane und c) ein oder mehrere Trialkoxysilane unter Zugabe von Wasser und in Anwesenheit von mindestens einem Brönstedt-sauren Katalysator, wobei die Umsetzung in einem Verfahrensschritt durchgeführt wird. Die technischen Grenzen dieses Prozesses im Hinblick auf den Erhalt der in das System hineingebrachten SiH-Funktionalität werden aus der dortigen Offenbarung deutlich. Es zeigt sich die Notwendigkeit, für empfindliche SiH-funktionelle verzweigte Siloxanstrukturen mit mindestens zwei sauren Katalysatoren (Trifluormethansulfonsäure vs. Trifluormethansulfonsäure und sulfonsaures lonenaustauscherharz, ibid. Beispiele 5 und 6) arbeiten zu müssen, wodurch das Verfahren in seiner technischen Realisierung aufwendig und kostspielig wird.

Über die mögliche Existenz ausschließlich aus D- und T- Einheiten aufgebauter Siloxane wurde in der Literatur bereits spekuliert. Wie W. Noll in Chemie und Technologie der Silicone, Weinheim (1960), Seite 182 ausführt, geht auf D.W. Scott (J. Am. Chem. Soc. 68, 356, 1946) der Hinweis zurück, dass sich aus einer extrem verdünnten Co-Hydrolyse von Dimethyldichlorsilan und Methyltrichlorsilan mit anschließender thermischer Umlagerung bicyclische Verbindungen von D- und T- Einheiten aufweisenden Siloxanen herleiten. Aus dem viskosen Co-Hydrolysat konnten bei Sumpftemperaturen zwischen 350 und 600°C Isomere in Mengen von noch nicht einmal 1% isoliert und danach kryoskopisch sowie elementaranalytisch mit sehr großen Unsicherheiten behaftet beschrieben werden. Scott spekuliert, dass seine D-T-Strukturen aufweisenden Verbindungen unmittelbar miteinander und nicht über D-Einheiten verknüpfte T-Strukturelemente enthalten. Die Interpretation der Ergebnisse beruht bei Scott auf der Prämisse, dass alle im Co-Hydrolysat enthaltenen SiC-Bindungen die von ihm gewählte, drastische thermische Behandlung überstehen.

Makarova et al. (Polyhedron Vol. 2, No. 4, 257-260 (1983)) haben 10 oligomere Methylsiloxane mit cyclischen und linearen Segmenten durch die gezielte, kalte Kondensation von SiCl-Gruppen enthaltenden mit SiOH-Gruppen aufweisenden Siloxanen in Gegenwart organischer Amine wie Triethylamin oder Anilin in Benzol oder Diethylether als Solventien hergestellt, die ausgefällten Aminhydrochloride abgetrennt, die rohen Reaktionsprodukte gewaschen und danach fraktioniert destilliert. Anschließend wurden die bicyclischen Methylsiloxane der Pyrolyse bei Temperaturen zwischen 400 und 600°C unterworfen und die Pyrolyseprodukte gaschromatographisch charakterisiert. Die im Rahmen dieser Studie eingesetzten niedermolekularen Verbindungen wie z.B. Hydroxynonamethylcyclopentasiloxan, Hydroxyheptamethylcyclotetrasiloxan, Dihydroxytetramethyldisiloxan sind aus Sicht der im industriellen Maßstab betriebenen Silikonchemie als rein akademische Exoten zu betrachten.

Insbesondere sind die auf diesem Wege synthetisierten, Molmassen-definierten, kettenreinen Siloxanverbindungen des D/T-Typs nicht geeignet für die Herstellung von organomodifizierten Siloxanen, die Eingang in anspruchsvolle technische Anwendungen wie z.B. in die PU-Schaumstabilisierung oder in die Entschäumung von Kraftstoffen, etc. nehmen. Wirkstoffe, die ein derartiges Anwendungsgebiet effektiv adressieren, sind stets von einer breiten Oligomerverteilung umfassend hohe, mittlere und niedrige Molmassen gekennzeichnet, da den darin enthaltenen Oligomeren in Abhängigkeit von ihrer Molmasse und damit ihres Diffusionsverhaltens sehr oft differenzierte tensidische Aufgaben in unterschiedlichen Zeitfenstern des jeweiligen Prozesses zuzuschreiben sind. Speziell im Falle der verzweigten organomodifizierten Siloxane sind dem eingangs diskutierten Reaktivitätsverhalten von M-, D- und T-Einheiten geschuldet eine gute Oligomerverteilung kombiniert mit einer möglichst statistischen Gleichverteilung von Siloxaneinheiten in den individuellen Molekülen jedoch nur dann zu erzielen, wenn das eingesetzte Startmaterial vom D/T-Typ bereits selbst einer Verteilungsfunktion genügt. Das gilt umso mehr, wenn die Organomodifizierung über ein SiH-Gruppen tragendes Intermediat erfolgt.

US2011/076409 und US 2010/239771 offenbaren die Herstellung von überwiegend aus D- und T-Einheiten bestehenden DT Polysiloxanen mit SiOR und/oder SiOH Gruppen.

Bei Würdigung dieses Standes der Technik zeichnet sich keine wirkliche Lösung zur Herstellung verzweigter organomodifizierter Siloxane ab.

Die noch nicht veröffentlichte europäische Patentanmeldung mit dem Aktenzeichen 17156421.4 stellt auf einen Herstellprozess zur Gewinnung verzweigter organomodifizierter Siloxane ab, der beinhaltet, dass man (a) in einem ersten Schritt zyklisch-verzweigte Siloxane vom D/T-Typ durch die Reaktion von Trialkoxysilan ausschließlich mit Siloxancyclen und/oder α,ω- Dihydroxy-polydimethylsiloxan in einem Lösemittel herstellt und (b) in einem zweiten Schritt die Funktionalisierung dieser zyklisch-verzweigten Siloxane durch saure Äquilibrierung mit funktionellen Silanen und/oder Siloxanen vornimmt. Die aus dem ersten Schritt hervorgehenden Mischungen zyklischer-verzweigter, ausschließlich D- und T-Einheiten aufweisender Siloxane ohne funktionelle Gruppen sind gemäß jener Schrift dadurch gekennzeichnet, dass der mit ²⁹Si-NMR-Spektroskopie bestimmbare summarische Anteil der in der Siloxanmatrix vorhandenen D- und T-Einheiten, die Si-Alkoxy- beziehungsweise SiOH-Gruppen aufweisen kleiner gleich 2 Molprozent ist, so dass sich keine signifikanten Anteile der aus der ersten Stufe stammenden Si-Alkoxy- bzw. SiOH-Gruppen im zweiten Schritt durchschleppen und molekular konservieren. Hierzu werden gemäß jener Schrift im ersten Schritt siliciumfreie Lösemittel, die flüssige (Alkyl)aromaten wie z.B. Toluol, die isomeren Xylole, Cycloaliphaten wie z.B. Cyclohexan, aber auch Diethylcarbonat umfassen, eingesetzt, besonders bevorzugt Toluol. Das in der Patentanmeldung mit dem Aktenzeichen 17156421.4 offenbarte Verfahren erschließt in einfacher Weise über die Zwischenproduktstufe der DT-Siloxane den Zugang zu funktionstragenden verzweigten Siloxanen oder auch zu verzweigten Siliconölen. Unter dem Aspekt der technischen Auslegung kann bei jenem Verfahren jedoch die Notwendigkeit der Verwendung von Lösungsmittel wie insbesondere Toluol möglicherweise als Nachteil angesehen werden, denn im Umfeld eines speziell organomodifizierte Siloxane herstellenden Produktionsbetriebes ist die organische Hilfsphase stets eine eher unliebsame Fremdphase, z.B. mit Blick auf deren Abtrennung, Aufreinigung und Rückführung in den Gesamtprozess. Der Gewährleistung nicht querkontaminierter Stoffströme kommt neben Aspekten der sicheren Lagerung, Handhabung und Entsorgung eine besondere Bedeutung zu.

Demgemäß besteht eine bedeutsame technische Herausforderung darin, die Bereitstellung verzweigter organomodifizierter Siloxane auch ohne den Einsatz siliciumfreier Lösemittel zu ermöglichen.

Erstaunlicherweise wurde nun im Rahmen der vorliegenden Erfindung gefunden, dass ein Verfahren, umfassend die sauer katalysierte Äquilibrierung von Trialkoxysilanen mit Siloxancyclen und/oder α,ω- Dihydroxy-polydimethylsiloxan und die durch Wasserzugabe eingeleitete Hydrolyse- und Kondensationsreaktion bei Verwendung einfacher Siloxancyclen als Lösungsmittel, und vorzugsweise thermischer Abtrennung des freigesetzten Alkohols und im System vorhandenen Wassers sowie einer Neutralisation oder Abtrennung des sauren Katalysators, die Herstellung von Mischungen zyklisch-verzweigter Siloxane ermöglicht. Diese zyklisch-verzweigten Siloxane können in einem weiteren Schritt mit Silanen und/ oder Siloxanen, insbesondere mit funktionellen Silanen und/ oder Siloxanen, sauer äquilibriert werden, um verzweigte organomodifizierte Siloxane oder verzweigter Silikonöle zu erhalten.

Damit ergeben sich die folgenden Gegenstände der Erfindung.

Ein Gegenstand der Erfindung sind Mischungen zyklischer-verzweigter, ausschließlich D- und T-Einheiten aufweisender Siloxane mit der Maßgabe, dass der mit ²⁹Si-NMR-Spektroskopie bestimmbare summarische Anteil der in der Siloxanmatrix vorhandenen D- und T-Einheiten, die Si-Alkoxy- und/oder SiOH-Gruppen aufweisen, größer 2 und kleiner 10 Molprozent, vorzugsweise kleiner 9 Molprozent, ist. Die Siloxane weisen keine weiteren funktionellen Gruppen auf.

Ein besonderer, zusätzlicher Vorteil der Erfindung liegt darin, dass die erfindungsgemäßen Mischungen sich durch eine excellente Lagerstabilität, selbst bei Lagerung an Luft und unter hohen Temperaturen, auszeichnen. Eine Verfestigung oder sogar Durchhärtung tritt nicht auf, auch nicht nach monatelanger Lagerung an Luft bei erhöhten Temperaturen.

Ein weiterer Gegenstand der Erfindung sind Mischungen zyklisch verzweigter, ausschließlich D- und T-Einheiten aufweisender Siloxane, gemäß einem der Ansprüche 1 bis 5, gelöst in einem Silicium-haltigen Lösemittel, vorzugsweise in den isomeren Siloxancyclen Oktamethylcyclotetrasiloxan (D₄), Dekamethylcyclotetrasiloxan (D₅) und/oder deren Mischungen.

Ein weiterer Gegenstand der Erfindung ist ein Verfahren zur Herstellung von Mischungen zyklischer-verzweigter, ausschließlich D- und T-Einheiten aufweisender Siloxane, gemäß einem der Ansprüche 1 bis 5, umfassend
(a) eine sauer katalysierte Äquilibrierung von Trialkoxysilanen mit Siloxancyclen und/oder α,ω- Dihydroxy-polydimethylsiloxan in Anwesenheit von mindestens einem sauren Katalysator und danach
(b) eine durch Wasserzugabe eingeleitete Hydrolyse- und Kondensationsreaktion sowie Zugabe eines Silicium-haltigen Lösemittels, gefolgt von,
(c) einer destillativen Abtrennung des freigesetzten Alkohols, im System vorhandenen Wassers und Silicum-haltigen Lösemittels sowie einer Neutralisation oder Abtrennung des sauren Katalysators und ggf. Abtrennung womöglich gebildeter Salze,
wobei das Silicium-haltige Lösungsmittel vorzugsweise die isomeren Siloxancyclen Oktamethylcyclotetrasiloxan (D₄), Dekamethylcyclotetrasiloxan (D₅) und/oder deren Mischungen umfasst, und vorteilhafterweise in Massenverhältnissen von Silicium-haltigem Lösemittel zum D- und T-Einheiten aufweisenden Siloxan von 1:1 bis 5:1 gearbeitet wird.

Noch ein weiterer Gegenstand der Erfindung ist ein Verfahren zur Herstellung verzweigter, organomodifizierter Siloxane, wobei in einem ersten Schritt ausschließlich D- und T-Einheiten aufweisende zyklische-verzweigte Siloxane bereitgestellt werden, mit der Maßgabe, dass der mit ²⁹Si-NMR-Spektroskopie bestimmbare summarische Anteil der in der Siloxanmatrix vorhandenen D- und T-Einheiten, die Si-Alkoxy- und/oder SiOH-Gruppen aufweisen größer 2 und kleiner 10 Molprozent, vorzugsweise kleiner 9 Molprozent, ist,
und in einem zweiten Schritt die zyklischen-verzweigten Siloxane mit Silanen und/oder Siloxanen sauer äquilibriert werden.

Die Erfindung und ihre Gegenstände werden nachfolgend genauer erläutert.

Bei den erfindungsgemäßen Mischungen zyklischer-verzweigter, ausschließlich D- und T-Einheiten aufweisender Siloxane liegt im Rahmen einer bevorzugten Ausführungsform der Erfindung das Verhältnis von D- zu T-Einheiten zwischen 10 : 1 und 3 : 1, bevorzugt zwischen 6 : 1 und 4 : 1.

Gemäß einer weiteren bevorzugten Ausführungsform der Erfindung liegt das Molmassenverhältnis M_{w}/Mₙ der Mischung im Bereich 2 < M_{w}/Mₙ < 50. Diese Parameter können bestimmt werden aus toluolischen Lösungen der Siloxane durch die Gel-Permeations-Chromatographie (GPC), die unter Nutzung eines Brechungsindex-Detektors im Abgleich gegen einen Polystyrol-Standard die Bestimmung von deren mittleren Molmasse M_{w} und deren Molmassenverteilung M_{w}/Mₙ gestattet.

Wenn die Mischungen zyklisch verzweigter, ausschließlich D- und T-Einheiten aufweisender Siloxane, wie zuvor beschrieben, sich dadurch auszeichnen, dass sich die verzweigende T-Einheit von Alkyltrialkoxysilanen und/oder, vorzugsweise oder, Phenyltrialkoxysilanen herleitet, so liegt eine weitere bevorzugte Ausführungsform der Erfindung vor.

Ebenso liegt eine bevorzugte Ausführungsform der Erfindung vor, wenn sich die verzweigende T-Einheit von Methyltriethoxysilan herleitet.

Die vorgenannten erfindungsgemäßen Mischungen können insbesondere über das erfindungsgemäße Verfahren zur Herstellung von Mischungen zyklischer-verzweigter, ausschließlich D- und T-Einheiten aufweisender Siloxane erhalten werden, umfassend
(a) eine sauer katalysierte Äquilibrierung von Trialkoxysilanen mit Siloxancyclen und/oder α,ω- Dihydroxy-polydimethylsiloxan in Anwesenheit von mindestens einem sauren Katalysator und danach
(b) eine durch Wasserzugabe eingeleitete Hydrolyse- und Kondensationsreaktion mit einer sich daran anschließenden Verwendung eines Silicium-haltigen Lösemittels, gefolgt von,
(c) einer destillativen Abtrennung des freigesetzten Alkohols, im System vorhandenen Wassers und Silicum-haltigen Lösemittels sowie einer Neutralisation oder Abtrennung des sauren Katalysators und ggf. Abtrennung womöglich gebildeter Salze.

Das Silizium-haltige Lösungsmittel umfasst vorzugsweise die isomeren Siloxancyclen Oktamethylcyclotetrasiloxan (D₄), Dekamethylcyclotetrasiloxan (D₅) und/oder deren Mischungen, und vorteilhafterweise wird in Massenverhältnissen von Silicium-haltigem Lösemittel zum D- und T-Einheiten aufweisenden Siloxan von 1:1 bis 5:1 gearbeitet. Dies entspricht einer bevorzugten Ausführungsform der Erfindung.

Gemäß einer weiteren bevorzugten Ausführungsform der Erfindung wird als saurer Katalysator para-Toluolsulfonsäure, Trifluormethansulfonsäure, Trichloressigsäure, Schwefelsäure, Perchlorsäure, Phosphorsäure und/oder Hexafluorphosphorsäure eingesetzt, vorzugsweise in Mengen von 0,1 bis 2,0 Gewichtsprozent, besonders bevorzugt in Mengen von 0,15 bis 1,0 Gewichtsprozent, jeweils bezogen auf den Silicium enthaltenden Anteil der Reaktionsmatrix.

Gemäß einer weiteren bevorzugten Ausführungsform der Erfindung wird als saurer Katalysator ein sulfonsaures, makrovernetztes lonenaustauscherharz eingesetzt, vorzugsweise in Mengen von 1,0 bis 10,0 Gewichtsprozent, besonders bevorzugt in Mengen von 2,0 bis 6,0 Gewichtsprozent jeweils bezogen auf den Silicium enthaltenden Anteil der Reaktionsmatrix.
Wird die erfindungsgemäße Umsetzung bei Temperaturen im Bereich von 20°C bis 120°C, vorzugsweise von 40°C bis 110°C durchgeführt, so liegt eine weitere bevorzugte Ausführungsform der Erfindung vor.

Ebenfalls liegt eine weitere bevorzugte Ausführungsform der Erfindung vor, wenn ein mindestens 150%-iger H₂O-Überschuss, vorzugsweise 150%- bis 250%-iger H₂O-Überschuss bezogen auf die zu kondensierenden Gruppen eingesetzt wird.

Umfasst die erfindungsgemäße Umsetzung einen Voräquilibrierschritt bei Temperaturen von T>40°C, gefolgt von einer durch Wasserzugabe eingeleiteten Kondensation bei Temperaturen von T>60°C, wobei die Wasserzugabe in einer Portion, in mehreren Portionen oder fortlaufend erfolgt, so liegt eine weitere bevorzugte Ausführungsform der Erfindung vor.

Für das erfindungsgemäße Verfahren können prinzipiell alle Trialkoxysilane eingesetzt werden. Als Trialkoxysilane können insbesondere solche eingesetzt werden, bei denen die Alkoxyreste alle gleich, alle unterschiedlich oder teilweise gleich sind. Als Trialkoxysilane können insbesondere Triethoxysilane, vorzugsweise Methyltriethoxysilan, Alkyltriethoxysilane wie beispielsweise n-Propyltriethoxysilan, Isobutyltriethoxysilan, Pentyltriethoxysilan, Hexyltriethoxysilan, Octyltriethoxysilan, Hexadecyltriethoxysilan, n-Octadecyltriethoxysilan, halogenhaltige oder pseudohalogenhaltige Alkyltrialkoxysilane, insbesondere Alkyltriethoxysilane, wie beispielsweise Chlorpropyltriethoxysilan, Tridecafluoro-1,1,2,2-tetrahydrooctyltriethoxysilan, Nonafluoro-1,1,2,2-tetrahydrohexyltriethoxysilan, 3-Cyanopropyltriethoxysilan, Trialkoxysilane, insbesondere Triethoxysilane mit funktionellen Gruppen, wie beispielsweise 3-Methacryloxypropyltriethoxysilan, 3-Mercaptopropyltriethoxysilan, 5- (Bicycloheptenyl) triethoxysilan, Phenyltriethoxysilan, (p-Chloromethyl)phenyltriethoxysilan, N- (3-Triethoxysilylpropyl) -4, 5-dihydroimidazol oder Dihydro-3-[3- (triethoxysilyl)propyl] furan-2, 5-dion, eingesetzt werden. Es kann vorteilhaft sein, wenn organisch funktionalisierte Trialkoxysilane als Verzweigungseinheit eingesetzt werden (einäquilibriert werden).

Am Beispiel der vom Methyltriethoxysilan abgeleiteten D/T-Cyclen sei eine bevorzugte Verfahrensvariante nachfolgend beispielhaft beschrieben:
Erfindungsgemäß bevorzugt wird die Äquilibrierung von Methyltriethoxysilan ausschließlich mit Siloxancyclen und/oder α,ω Dihydroxypolydimethylsiloxan unter Zugabe einer katalytischen Menge von vorzugsweise Trifluormethansulfonsäure bei 60°C im Laufe von 2 bis 4 Stunden vorgenommen, dann wird nach Zugabe eines vorzugsweise 100%igen stöchiometrischen Überschusses an Wasser die Kondensationsreaktion im Laufe von vorzugsweise 2 bis 4 Stunden bei vorzugsweise 80°C durchgeführt, danach wird dem System vorzugsweise erneut eine Portion Wasser hinzugefügt, um dann ein Silicium-enthaltendes Lösungsmittel, vorzugsweise einfache Siloxancyclen (D₄/ D₅), hinzuzugeben und das Abdestillieren von Ethanol-Wasser-Gemischen bis zum Erreichen einer Sumpftemperatur von 90°C durchzuführen und dann das System gegebenenfalls für 2 bis 4 Stunden bei 90°C zu belassen. Man kühlt danach das Stoffsystem ab und versetzt vorzugsweise mit Ammoniak, rührt zum Zwecke der Neutralisation für weitere 30 Minuten und destilliert restliches Wasser sowie die einfachen, nicht T-Gruppen-enthaltenden Siloxancyclen (D₄/ D₅) ab, ehe man den Destillationsrückstand von ausgefallenem Ammoniumtriflat durch Filtration abtrennt.

Die hier in das System eingetragene Wassermenge bemisst sich bevorzugt so, dass die über alle Schritte des erfindungsgemäßen Verfahrens eingesetzte Gesamtwassermenge einen stöchiometrischen Überschuss von 150% bis 500%, vorzugsweise 150 % bis 250% bezogen auf eingesetztes Methyltriethoxysilan abdeckt.

Die im erfindungsgemäßen Verfahren als Äquilibrierkatalysator bevorzugt verwendete Trifluormethan-sulfonsäure wird vorzugsweise in Mengen von 0,1 - 0,5 Gew-%, bevorzugt in Mengen von 0,15 bis 0,3 Gew-% bezogen auf die Masse des Äquilibrieransatzes eingesetzt.

Für den Fachmann vollkommen überraschend, fungieren, im gesamten Kontext dieser Erfindung, die nach der Wasserzugabe hinzugefügten, einfachen Siloxancyclen (D₄/ D₅) in der anschließenden, vorzugsweise bis zu 90°C Sumpftemperatur durchgeführten Destillationsphase in vorteilhafter Weise ausschließlich als ein systemverträgliches Lösungsmittel und nicht etwa als Co-Reaktand und werden somit trotz ihrer Siloxannatur und der noch im System vorhandenen Äquilibriersäure nicht in die D/T-Cyclen eingebaut.

Ein entscheidender Vorteil des erfindungsgemäßen Herstellprozesses liegt darin, dass man die Synthese von zyklisch-verzweigten Siloxanen unter verschärften Reaktionsbedingungen wie etwa einer hohen Säurekonzentration und hohen Temperaturen ohne Produktschädigung durchführen kann, da keinerlei empfindliche Gruppierungen (wie z.B. SiH-Funktionen) zugegen sind. Hierdurch gelingt ein optimaler Einbau von Verzweigungseinheiten (T-Strukturen) in die molekularen Gerüste der Siloxanoligomeren, bei dem die T-Strukturen idealer Weise jeweils durch D-Einheiten getrennt und nicht domänenartig kumuliert vorliegen, was die ²⁹Si-NMR-Spektroskopie insbesondere im Verschiebungsbereich der T-Strukturen nahelegt.

Falls gewünscht, kann man das Reaktionssystem nach destillativer Entfernung des Ethanols noch für 2 bis 4 Stunden bei 90°C halten. Experimente belegen jedoch, dass man nach der destillativen Entfernung der Ethanol-Wasser-Gemische auch unmittelbar die Abkühl- und Neutralisationsphase anschließen kann, ohne dass es zu einer qualitativen Beeinträchtigung der nach dem erfindungsgemäßen Verfahren gewonnenen D/T-Cyclen kommt, wie die begleitende ²⁹Si-NMR-Analytik ausweist.

Das Verhältnis von D- zu T-Einheiten liegt vorzugsweise zwischen 10 : 1 und 3 : 1, bevorzugt zwischen 6 : 1 und 4 : 1. Abhängig vom angestrebten D/T-Verhältnis wird die als Lösungsmittel eingesetzte Menge an einfachen Siloxancyclen (D₄/ D₅) so bemessen, dass man über den Verlauf der Reaktion hinweg gut handhabbare Viskositäten sicherstellt. Bevorzugt werden Massenverhältnisse von Lösemittel zum Siloxan von 0,5 : 1 bis 5 : 1 gewählt. Der wirtschaftlichen Betrachtung folgend, erschließt sich, dass man in der industriellen Praxis stets einen Kompromiss zwischen gut handhabbaren Viskositäten und den erzielbaren Raum-Zeit-Ausbeuten wählt.

Die dabei erfindungsgemäß bevorzugt einsetzbaren Silicium-haltigen Lösemittel umfassen die einfachen, flüssigen Dimethylsiloxanzyklen wie Oktamethylcyclotetrasiloxan (D₄) und Dekamethylcyclopentasiloxan (D₅) sowie deren Gemische. Besonders bevorzugt ist Dekamethylcyclopentasiloxan (D₅).

Die Bedeutung der hinzugefügten, einfachen Siloxancyclen (D₄/ D₅) für das Gelingen des erfindungsgemäßen Verfahrens wird deutlich anhand des nicht erfindungsgemäßen Vergleichsversuchs (Beispiel 2, vgl. experimenteller Teil), bei dem man auf deren Zugabe verzichtet hat.

Die Zugabe des zur Neutralisation bevorzugt eingesetzten Ammoniaks erfolgt vorzugsweise in Form des gasförmigen Ammoniaks. Falls gewünscht, können jedoch auch wässrige Ammoniaklösungen eingesetzt werden.

Falls gewünscht, kann man das erfindungsgemäße Verfahren auch dahingehend abwandeln, dass man nach dem Verfahrensschritt, bei dem das System vorzugsweise noch für 2 bis 4 Stunden bei 90°C belassen wird, die Wasserphase nach Abkühlen abtrennt und die Siloxanphase mit Natriumhydrogencarbonat neutralisiert, vom Salz abfiltriert und die einfachen nicht T-Gruppen-enthaltenden Siloxancyclen (D₄/ D₅) abdestilliert.

Prinzipiell können auch andere Basen, wie zum Beispiel organische Amine zur Neutralisation der im System vorhandenen Trifluormethansulfonsäure eingesetzt werden. Bevorzugt wird Ammoniak in Form wässriger Lösungen eingesetzt. Insbesondere unter dem Aspekt betrieblicher Produktion wird jedoch besonders bevorzugt gasförmiger Ammoniak eingesetzt.

Für den Fall, dass gemäß einer weiteren bevorzugten Ausführungsform der Erfindung als saurer Katalysator ein sulfonsaures, makrovernetztes lonenaustauscherharz eingesetzt wird, tritt an die Stelle der unter Basenzusatz eingeleiteten Neutralisation die einfache Abtrennung des Harzes zum Beispiel durch Filtration.

In nahezu quantitativen Ausbeuten können Mischungen zyklisch-verzweigter Siloxane isoliert werden, die klare, farblose, niedrig-viskose Flüssigkeiten darstellen und deren zugehöriges ²⁹Si-NMR-Spektrum die dominierende Präsenz von D- und T-Einheiten belegt. Die ²⁹Si-NMR-spektroskopisch bestimmten summarischen Gehalte an D- und T-Einheiten, die Si-Alkoxy-beziehungsweise SiOH-Gruppen aufweisen sind bei den nach dem erfindungsgemäßen Verfahren erhaltenen zyklisch-verzweigten Siloxane vom D/T-Typ größer als 2 Molprozent. Die Si-Alkoxy-beziehungsweise SiOH-Gehalte liegen vorzugsweise in einem Konzentrationsbereich von 3 bis 8 Molprozent, bevorzugt in einem Konzentrationsbereich von 3 bis 5 Molprozent bezogen auf die spektroskopisch erfasste Gesamtheit an Silizium.

Der hier angegebene erfindungsgemäß bevorzugte Konzentrationsbereich der zur Kondensation befähigten Gruppen (Si-Alkoxy- beziehungsweise SiOH) leitet sich vom technischen Aufwand her, den man treiben muss, um erfindungsgemäß hergestellte zyklisch-verzweigte Siloxane vom D/T-Typ zu funktionalisierten verzweigten Siloxanen und / oder verzweigten Siliconölen zu verarbeiten.

Wie im Beispiel 4 offenbart, lassen sich erfindungsgemäß in einfachen Siloxancyclen (D₄/ D₅) hergestellte, zyklisch-verzweigte Siloxane vom D/T-Typ, die einen spektroskopisch bestimmten Anteil an Si-Alkoxy-beziehungsweise SiOH von 3 bis 5 Molprozent bezogen auf die spektroskopisch erfasste Gesamtheit an Silizium besitzen, ohne Anpassung der Standardäquilibrierbedingungen (0,1 Gew.-% Trifluormethansulfonsäure-Zusatz, 40°C ≤ Reaktionstemperatur ≤ 60°C, Reaktionszeit 6 Stunden) zu den entsprechenden funktionalisierten verzweigten Siloxanen und / oder verzweigten Siliconölen verarbeiten, was einer weiteren bevorzugten Ausführungsform des erfindungsgemäßen Verfahrens entspricht.

Höhere Anteile an Si-Alkoxy- beziehungsweise SiOH führen dazu, eine Anpassung der Standardäquilibrierbedingungen dahingehend vorzunehmen, dass man zum Beispiel die zugesetzte Menge an Trifluormethansulfonsäure geringfügig erhöht (von 0,1 Gew.-% auf zum Beispiel 0,2 Gew.-%, Beispiel 6) und/ oder auch durch das zeitlich befristete Anlegen eines Hilfsvakuums im Äquilibrierschritt die Konzentration der zur Kondensation befähigten Gruppen absenkt (Beispiel 5), was einer weiteren bevorzugten Ausführungsform des erfindungsgemäßen Verfahrens entspricht.

Ein weiteres erfindungsgemäß bevorzugtes Vorgehen besteht darin, das zeitlich befristete Anlegen eines Hilfsvakuums zu kombinieren mit der sequenzierten Zugabe der einzusetzenden Menge an Trifluormethansulfonsäure (Beispiel 7), was ebenfalls einer weiteren bevorzugten Ausführungsform der Erfindung entspricht. Durch diese Verfahrensvariante ist es möglich, die Menge an Trifluormethansulfonsäure auf dem Niveau der Standardäquilibrierbedingungen zu belassen (0,1 Gew.-%).

Ein erfindungsgemäßes Verfahren, wie zuvor beschrieben, bei dem also in dem zweiten Schritt, in welchem die Mischungen zyklischer-verzweigter Siloxane mit Silanen und/oder Siloxanen sauer äquilibriert werden,
(a) eine Menge von ≥ 0,2 Gew.-% an saurem Katalysator, vorzugsweise Trifluormethansulfonsäure, eingesetzt wird,
(b) durch das, vorzugsweise zeitlich befristete, Anlegen eines Hilfsvakuums im Äquilibrierschritt die Konzentration der zur Kondensation befähigten Gruppen absenkt wird, und/oder
(c) eine sequenzierte Zugabe des sauren Katalysators, vorzugsweise Trifluormethansulfonsäure, erfolgt, und/oder
(d) die Schritte (b) und (c) kombiniert werden,
entspricht einer bevorzugten Ausführungsform der Erfindung, welche wiederum besonders bevorzugt ist, wenn die in dem ersten Schritt erzeugten Mischungen zyklischer-verzweigter, ausschließlich D- und T-Einheiten aufweisender Siloxane die Maßgabe erfüllen, dass der mit ²⁹Si-NMR-Spektroskopie bestimmbare summarische Anteil der in der Siloxanmatrix vorhandenen D- und T-Einheiten, die Si-Alkoxy- und/oder SiOH-Gruppen aufweisen, größer 5 und kleiner 10 Molprozent, vorzugsweise kleiner 9 Molprozent, ist.

Hierbei beträgt das angelegte Hilfsvakuum vorzugsweise ≤ 200 mbar, bevorzugt ≤ 150 mbar und/ oder die sequenzierte Zugabe des sauren Katalysators erfolgt bevorzugt in 2 Schritten.

Eine weitere erfindungsgemäß bevorzugte Ausführungsform des beanspruchten Verfahrens ergibt sich aus der Verwendung eines wasserhaltigen, sulfonsauren, makroporösen Polystyrolharzes, zum Beispiel eines mit 10 Gew-% Wasser behafteten Lewatit® K 2621. Wird dieses Harz zum Beispiel in Mengen von ca. 6 Gew-% dem Reaktionssystem als Katalysator hinzugefügt, so weist das nach einer bei etwa 40°C im Laufe von 6 Stunden durchgeführten Reaktion gewonnene Produkt keinerlei Anteile von SiOH- beziehungsweise SiOR-Gruppen bezogen auf das ²⁹Si-NMR-spektroskopisch erfasste Gesamtsilizium auf (Beispiel 8).

Ein erfindungsgemäßes Verfahren, wie zuvor beschrieben, bei dem also in dem zweiten Schritt, in welchem die Mischungen zyklischer-verzweigter Siloxane mit Silanen und/oder Siloxanen sauer äquilibriert werden und die Äquilibrierung an einem wasserhaltigen, sulfonsauren, makroporösen Polystyrolharz vorgenommen wird, das vorzugsweise in Mengen von 3 bis 9 Gew.-% bezogen auf die zu äquilibrierende Mischung, eingesetzt wird und vorzugsweise mit 8 bis 12 Gew.-% Wasser behaftet ist und dessen spezifische Oberfläche vorzugsweise ≥ 35 m²/g und dessen mittlerer Porendurchmesser vorzugsweise wenigstens 65 nm beträgt, entspricht einer besonders bevorzugten Ausführungsform der Erfindung.

Ein besonders bevorzugtes sulfonsaures Kationenaustauscherharz ist beispielsweise Lewatit® K 2621.

Zur Erzielung der finalen Siloxanstruktur wird die saure Äquilibrierung mit Silanen, vorzugsweise funktionellen Silanen, und/ oder Siloxanen durchgeführt.

Dies entspricht dem erfindungsgemäßen Verfahren zur Herstellung verzweigter, organomodifizierter Siloxane, wobei
in einem ersten Schritt Mischungen zyklischer-verzweigter Siloxane bereitgestellt werden, vorzugsweise wie zuvor im Detail beschrieben, insbesondere gemäß einem der Ansprüche 1 bis 11, und
in einem zweiten Schritt die Mischungen zyklischer-verzweigter Siloxane mit Silanen und/oder Siloxanen sauer äquilibriert werden.

Als Silane und/oder Siloxane können alle sauer äquilibrierbaren Siliciumverbindungen eingesetzt werden. Funktionelle Silane und/oder Siloxane sind bevorzugt.

Unter funktionellem Silan bzw. Siloxan werden in diesem Zusammenhang alle diejenigen ein und/ oder mehrere Siliziumatome umfassenden Verbindungen verstanden, die auf dem Wege der sauren Äquilibrierung in das Copolymer eingebaut werden können. Insbesondere weisen diese sauer äquilibrierbaren Silane bzw, Siloxane neben gegebenenfalls vorhandenen Wasserstoff-, Alkyl- bzw. Aryl- oder Vinylsubstituenten auch noch Hydroxy-, Alkoxy- und Chlor- Substituenten auf. Ebenfalls eignen sich funktionelle Silane bzw. Siloxane, die saure Gruppierungen wie zum Beispiel Toluolsulfonat-, Trifluormethylsulfonat- und Sulfat-Reste tragen.

Als Silane können insbesondere Diethoxydimethylsilan, Trimethylalkoxysilane und/oder Dimethyldichlorsilan eingesetzt werden.

Als Siloxane können insbesondere Tetramethyldisiloxan, α,ω-Dihydrogen-polydimethylsiloxane, Poly(methylhydrogen)siloxane, α,ω-Dialkoxypolydimethylsiloxane und/oder α,ω-Divinylpoly-dimethylsiloxane eingesetzt werden.

Als Sonderfall werden durch das saure Co-Äquilibrieren des im ersten Schritt gewonnenen zyklisch-verzweigten Siloxans vom D/T-Typ mit Hexamethyldisiloxan und/ oder Polydimethylsiloxanen verzweigte Siliconöle zugänglich.

Dies entspricht dem erfindungsgemäßen Verfahren zur Herstellung verzweigter Silikonöle, wobei in einem ersten Schritt zyklische-verzweigte Siloxane bereitgestellt werden, vorzugsweise wie einem der Ansprüche 1 bis 11 festgelegt, und in einem zweiten Schritt die zyklischen-verzweigten Siloxane mit Polydimethylsiloxanen oder Hexamethyldisiloxan umgesetzt werden.

Als saure Katalysatoren eignen sich die nach dem Stand der Technik bekannten starken Säuren (Äquilibriersäuren) für Siloxane, also Mineralsäuren, wie beispielsweise Schwefelsäure, aber auch Sulfonsäuren, Fluoralkylsulfonsäuren wie zum Beispiel Trifluormethansulfonsäure, saure Tonerden oder saure lonenaustauscherharze, wie beispielsweise die unter den Markennamen Amberlite®, Amberlyst® oder Dowex® und Lewatit® bekannten Produkte .

In dem erfindungsgemäßen Verfahren können sowohl natürliche Ionenaustauscher, wie beispielsweise Zeolithe, Montmorillonite, Attapulgite, Bentonite und andere Alumosilikate sowie synthetische Ionenaustauscher eingesetzt werden. Letztere sind vorzugsweise Festkörper (meist in Körnerform) mit einer dreidimensionalen, wasserunlöslichen hochmolekularen Matrix auf der Basis von Phenol-Formaldehyd-Harzen oder Copolymerisate aus Styrol-Divinylbenzol, in die zahlreiche "Ankergruppen" unterschiedlicher Acidität eingebaut sind.

Als saure Ionenaustauscher können unter anderem solche vorteilhaft eingesetzt werden, wie sie in der EP 1439200 B1 beschrieben sind.

Bevorzugt werden sulfonsaure Katalysatoren und ganz besonders bevorzugt Trifluormethan-sulfonsäure eingesetzt.

Die gaschromatographische Analyse zeigt, dass in den Äquilibraten typischerweise einfache Siloxancyclen wie D₄ (Octamethylcyclotetrasiloxan), D₅ (Dekamethylcyclopentasiloxan) und D₆ (Dodekamethylcyclohexasiloxan) nur in Gewichtsanteilen von kleiner 10% zugegen sind.

Falls für die spätere jeweilige Anwendung gewünscht (zum Beispiel im Rahmen der VOC-Diskussion (VOC = Volatile Organic Compounds) oder des Anti-Foggings), können diese Siloxancyclen durch einfache Destillation abgetrennt und rezykliert werden.

Dem Fachmann ohne Weiteres verständlich, eignen sich die aus dem zweiten Schritt durch saure Äquilibrierung gewonnenen verzweigten, organomodifizierten Siloxane als Ausgangsmaterial zur Herstellung von Stabilisatoren für PUR-Schäume, zur Herstellung von Entschäumern, zur Herstellung von Lackadditiven, zur Herstellung von Emulgatoren, insbesondere von kosmetischen Emulgatoren, zur Herstellung kosmetischer Conditioner, zur Herstellung von Entlüftern, zur Herstellung von Dismulgatoren, zur Herstellung von Textilausrüstungsmitteln, zur Herstellung von Bautenschutzadditiven, zur Herstellung von Kunststoffadditiven, insbesondere Anti-Scratch-Additiven,zur Herstellung von Antifouling-Additiven bzw. -Beschichtungen und zur Herstellung von Anti-Icing-Beschichtungen. Die demgemäße Verwendung ist ein weiterer Gegenstand der vorliegenden Erfindung.

In Abhängigkeit von der im zweiten Schritt eingebauten Funktionalität (z.B. SiH-Gruppe) oder SiCI-Gruppe werden für alle diese vorgenannten Anwendungen nach Auswahl geeigneter Reaktionspartner SiC-verknüpfte Finalprodukte via Hydrosilylierung, oder aber SiOC-verknüpfte Finalprodukte via dehydrogenativer SiOC-Verknüpfung oder Kondensation nach den bekannten Verfahren der Siliconechemie zugänglich.

Die ²⁹Si-NMR-Proben werden im Rahmen dieser Erfindung bei einer Messfrequenz von 79,49 MHz in einem Bruker Avance III Spektrometer, das mit einem Probenkopf 287430 mit 10 mm Spaltbreite ausgestattet ist, bei 22°C gelöst in CDCl₃ und gegen Tetramethylsilan (TMS) als externem Standard [δ(²⁹Si) = 0,0 ppm] gemessen.

Die Bestimmung der gewichtsmittleren Molmasse M_{w} und der Molmassenverteilung M_{w}/ Mₙ erfolgt im Rahmen dieser Erfindung an einem EcoSEC GPC/SEC-Gerät der Firma TOSOH Bioscience GmbH durch Gel-Permeations-Chromatographie aus toluolischen Lösungen der Siloxane. Verwendet wird eine Micro SDV 1000/10000-Säule von 55,00 cm Länge kombiniert mit einem EcoSEC RI-Detektor (dual flow refractive index detection). Der Polystyrol-Standard deckt den Molmassenbereich von 162 g/mol bis 2520000 g/mol ab.

### Beispiele

### 1) Herstellung eines zyklisch-verzweigten Siloxans mit einem angestrebten D-/ T-Verhältnis von 6 : 1 (erfindungsgemäß)

In einem 500-ml-Vierhalsrundkolben mit KPG-Rührer und aufgesetztem Rückflusskühler werden 52,2 g (0,293mol) Methyltriethoxysilan zusammen mit 130,3 g (0,351 mol) Dekamethylcyclopentasiloxan unter Rühren auf 60°C erwärmt, mit 0,400 g Trifluormethansulfonsäure beaufschlagt und für 4 Stunden äquilibriert. Dann werden 15,8 g Wasser sowie 4,0 g Ethanol hinzugefügt und der Ansatz wird für weitere 4 Stunden auf Rückflusstemperatur (ca. 80°C) erhitzt. Man fügt 10,6 g Wasser sowie 200 ml Dekamethylcyclopentasiloxan (D₅) hinzu und tauscht den Rückflusskühler gegen eine Destillationsbrücke aus und destilliert innerhalb der folgenden Stunde die bis 90°C flüchtigen Bestandteile ab. Man belässt den Reaktionsansatz für weitere 2 Stunden bei 90°C, lässt dann auf 50°C abkühlen und fügt 5 ml einer 25%igen, wässrigen Ammoniaklösung hinzu und rührt zur vollständigen Neutralisation noch eine weitere Stunde nach.

Bei 100°C und einem angelegten Hilfsvakuum von < 1mbar werden Wasser und das als Lösungsmittel eingesetzte Dekamethylcyclopentasiloxan (D₅) abdestilliert. Nach Erkalten des Destillationssumpfes wird mit Hilfe eines Faltenfilters das ausgefallene Ammoniumtriflat abgetrennt. Das Filtrat ist eine farblose, leichtbewegliche Flüssigkeit deren ²⁹Si-NMR-Spektrum ein D-/T-Verhältnis von 6,1 : 1 (angestrebt 6,0 : 1) zuweist. Bezogen auf die Summe der spektroskopisch erfassten Si-Einheiten kommt den D- und T-Einheiten, die Si-Alkoxy- beziehungsweise SiOH-Gruppen tragen, ein Anteil von 4,1 Molprozent zu.

Das Siloxan zeigte eine excellente Lagerstabilität, auch bei Lagerung an Luft und unter hohen Temperaturen. Eine Verfestigung oder sogar Durchhärtung trat nicht auf, auch nicht nach monatelanger Lagerung an Luft bei erhöhten Temperaturen.

### 2) Herstellung eines zyklisch-verzweigten Siloxans mit einem angestrebten D-/ T-Verhältnis von 6 : 1 (nicht erfindungsgemäß)

In einem 500-ml-Vierhalsrundkolben mit KPG-Rührer und aufgesetztem Rückflusskühler werden 52,2 g (0,293mol) Methyltriethoxysilan zusammen mit 130,3 g (0,351 mol) Dekamethylcyclopentasiloxan unter Rühren auf 60°C erwärmt, mit 0,400 g Trifluormethansulfonsäure beaufschlagt und für 4 Stunden äquilibriert. Dann werden 15,8 g Wasser sowie 4,0 g Ethanol hinzugefügt und der Ansatz wird für weitere 4 Stunden auf Rückflusstemperatur (ca. 80°C) erhitzt. Man fügt 10,6 g Wasser hinzu und tauscht den Rückflusskühler gegen eine Destillationsbrücke aus und destilliert innerhalb der folgenden Stunde die bis 90°C flüchtigen Bestandteile ab. Eine signifikante Viskositätserhöhung begleitet von Schaumbildung leitet die vollständige Vergelung des Reaktionsansatzes ein.

### 3) Herstellung eines zyklisch-verzweigten Siloxans mit einem angestrebten D-/ T-Verhältnis von 6 : 1 (erfindungsgemäß)

In einem 10-I-Vierhalsrundkolben mit KPG-Rührer und aufgesetztem Rückflusskühler werden 783 g (4,39 mol) Methyltriethoxysilan zusammen mit 1957,5 g (5,279 mol) Dekamethylcyclopentasiloxan unter Rühren auf 60°C erwärmt, mit 5,95 g (0,2 %) Trifluormethansulfonsäure beaufschlagt und für 4 Stunden äquilibriert. Dann werden 237 g Wasser sowie 59,3 g Ethanol hinzugefügt und der Ansatz wird für weitere 4 Stunden auf Rückflusstemperatur (ca. 80°C) erhitzt. Man fügt 78,9 g Wasser sowie 3000 ml Dekamethylcyclopentasiloxan (D₅) hinzu und tauscht den Rückflusskühler gegen eine Destillationsbrücke aus und destilliert innerhalb der folgenden Stunde die bis 90°C flüchtigen Bestandteile ab. man lässt dann auf 60°C abkühlen und fügt 11,5 g einer 25%igen, wässrigen Ammoniaklösung hinzu und rührt zur vollständigen Neutralisation noch eine weitere Stunde nach. Bei 70°C und einem angelegten Hilfsvakuum von < 1mbar wird zunächst Wasser und dann nach Erhöhung der Sumpftemperatur auf 130°C das als Lösungsmittel eingesetzte Dekamethylcyclopentasiloxan (D₅) abdestilliert. Nach Erkalten des Destillationssumpfes wird mit Hilfe eines Faltenfilters das ausgefallene Ammoniumtriflat abgetrennt. Das Filtrat ist eine farblose, leichtbewegliche Flüssigkeit deren ²⁹Si-NMR-Spektrum ein D-/T-Verhältnis von 5,8 : 1 (angestrebt 6,0 : 1) zuweist. Bezogen auf die Summe der spektroskopisch erfassten Si-Einheiten kommt den D- und T-Einheiten, die Si-Alkoxy- beziehungsweise SiOH-Gruppen tragen, ein Anteil von 7,8 Molprozent zu. Auch dieses Siloxan zeigte eine excellente Lagerstabilität wie in Beispiel 1).

### 4) Herstellung eines verzweigten, terminale SiH-Funktionen aufweisenden Wasserstoffsiloxans aus dem zyklisch-verzweigten Siloxan aus Beispiel 1 mit α,ω-Dihydrogenpolydimethylsiloxan und Dekamethylcyclopentasiloxan (erfindungsgemäß)

32,5 g des in Beispiel 1 hergestellten zyklisch verzweigten Siloxans werden zusammen mit 26,2 g eines a,ω-Dihydrogenpolydimethylsiloxans (SiH-Wert: 2,90 Val/kg) und 191,3 g Dekamethylcyclopentasiloxan unter Zufügen von 0,25 g Trifluormethansulfonsäure (0,1 m-% bezogen auf den Gesamtansatz) in einem 500-ml-Vierhalskolben mit KPG-Rührer und aufgesetztem Rückflußkühler für 6 Stunden auf 40°C erhitzt und dann mit 5 g Natriumhydrogencarbonat versetzt und 30 Minuten nachgerührt. Man trennt mit Hilfe einer Filterpresse (Seitz K 300-Filterscheibe) das Salz vom Äquilibrat ab.

Erhalten wird ein farbloses verzweigtes Wasserstoffsiloxan mit Dimethylhydrogensiloxy-Funktionen in seinen Termini (SiH-Wert: 0,30 Val/kg) und einer Viskosität von 145 mPas (25°C, Höppler-Viskosimeter). Das zugehörige ²⁹Si-NMR-Spektrum belegt die Zielstruktur.

### 5) Herstellung eines verzweigten, terminale SiH-Funktionen aufweisenden Wasserstoffsiloxans aus dem zyklisch-verzweigten Siloxan aus Beispiel 3 mit α,ω-Dihydrogenpolydimethylsiloxan und Dekamethylcyclopentasiloxan (erfindungsgemäß)

29,2 g des in Beispiel 3 hergestellten zyklisch verzweigten Siloxans werden zusammen mit 26,3 g eines a,ω-Dihydrogenpolydimethylsiloxans (SiH-Wert: 2,90 Val/kg) und 194,5 g Dekamethylcyclopentasiloxan unter Zufügen von 0,25 g Trifluormethansulfonsäure (0,1 m-% bezogen auf den Gesamtansatz) in einem 500-ml-Vierhalskolben mit KPG-Rührer und aufgesetztem Rückflusskühler unter Anlegen eines Ölpumpenvakuums von 100 mbar für 6 Stunden auf 40°C erhitzt. Nach Aufhebung des Hilfsvakuums wird der Ansatz dann mit 5 g Natriumhydrogencarbonat versetzt und 30 Minuten nachgerührt. Man trennt mit Hilfe einer Filterpresse (Seitz K 300-Filterscheibe) das Salz vom Äquilibrat ab.

Erhalten wird ein farbloses verzweigtes Wasserstoffsiloxan mit Dimethylhydrogensiloxy-Funktionen in seinen Termini (SiH-Wert: 0,31 Val/kg) und einer Viskosität von 156 mPas (25°C, Höppler-Viskosimeter).

### 6) Herstellung eines verzweigten, terminale SiH-Funktionen aufweisenden Wasserstoffsiloxans aus dem zyklisch-verzweigten Siloxan aus Beispiel 3 mit α,ω-Dihydrogenpolydimethylsiloxan und Dekamethylcyclopentasiloxan (erfindungsgemäß)

29,2 g des in Beispiel 3 hergestellten zyklisch verzweigten Siloxans werden zusammen mit 26,3 g eines a,ω-Dihydrogenpolydimethylsiloxans (SiH-Wert: 2,90 Val/kg) und 194,5 g Dekamethylcyclopentasiloxan unter Zufügen von 0,5 g Trifluormethansulfonsäure (0,2 m-% bezogen auf den Gesamtansatz) in einem 500-ml-Vierhalskolben mit KPG-Rührer und aufgesetztem Rückflußkühler für 6 Stunden auf 40°C erhitzt und dann mit 10 g Natriumhydrogencarbonat versetzt und 30 Minuten nachgerührt. Man trennt mit Hilfe einer Filterpresse (Seitz K 300-Filterscheibe) das Salz vom Äquilibrat ab.

Erhalten wird ein farbloses verzweigtes Wasserstoffsiloxan mit Dimethylhydrogensiloxy-Funktionen in seinen Termini (SiH-Wert: 0,29 Val/kg) und einer Viskosität von 149 mPas (25°C, Höppler-Viskosimeter).

### 7) Herstellung eines verzweigten, terminale SiH-Funktionen aufweisenden Wasserstoffsiloxans aus dem zyklisch-verzweigten Siloxan aus Beispiel 3 mit α,ω-Dihydrogenpolydimethylsiloxan und Dekamethylcyclopentasiloxan (erfindungsgemäß)

29,2 g des in Beispiel 3 hergestellten zyklisch verzweigten Siloxans werden zusammen mit 26,3 g eines a,ω-Dihydrogenpolydimethylsiloxans (SiH-Wert: 2,90 Val/kg) und 194,5 g Dekamethylcyclopentasiloxan unter Zufügen von 0,08 g Trifluormethansulfonsäure (0,033 m-% bezogen auf den Gesamtansatz) in einem 500-ml-Vierhalskolben mit KPG-Rührer und aufgesetztem Rückflußkühler für 1 Stunden auf 40°C unter Anlegen eines durch eine Ölpumpe erzeugten Hilfsvakuums von 100 mbar erhitzt. Das Hilfsvakuum wird dann aufgehoben und es werden weitere 0,17 g Trifluormethansulfonsäure (0,067 m-% bezogen auf den Gesamtansatz) hinzugefügt. Man lässt weitere 6 Stunden ohne Anlegen eines Hilfsvakuums bei 40°C reagieren. Man versetzt mit 5 g Natriumhydrogencarbonat und lässt 30 Minuten nachrühren und trennt dann mit Hilfe einer Filterpresse (Seitz K 300-Filterscheibe) das Salz vom Äquilibrat ab.

Erhalten wird ein farbloses verzweigtes Wasserstoffsiloxan mit Dimethylhydrogensiloxy-Funktionen in seinen Termini (SiH-Wert: 0,29 Val/kg) und einer Viskosität von 142 mPas (25°C, Höppler-Viskosimeter).

### 8) Herstellung eines verzweigten, terminale SiH-Funktionen aufweisenden Wasserstoffsiloxans aus dem zyklisch-verzweigten Siloxan aus Beispiel 3 mit α,ω-Dihydrogenpolydimethylsiloxan und Dekamethylcyclopentasiloxan (erfindungsgemäß)

29,2 g des in Beispiel 3 hergestellten zyklisch verzweigten Siloxans werden zusammen mit 26,3 g eines a,ω-Dihydrogenpolydimethylsiloxans (SiH-Wert: 2,90 Val/kg) und 194,5 g Dekamethylcyclopentasiloxan unter Zufügen von 15 g vorgestrockneten Lewatit K2621 (10 Gew-% Wassergehalt, 6 Gew-% bezogen auf den Gesamtansatz) in einem 500-ml-Vierhalskolben mit KPG-Rührer und aufgesetztem Rückflußkühler für 6 Stunden auf 40°C erhitzt und dann trennt man mit Hilfe einer Filterpresse (Seitz K 300-Filterscheibe) das lonenaustauscherharz vom Äquilibrat ab.

Erhalten wird ein farbloses verzweigtes Wasserstoffsiloxan mit Dimethylhydrogensiloxy-Funktionen in seinen Termini (SiH-Wert: 0,30 Val/kg) und einer Viskosität von 152 mPas (25°C, Höppler-Viskosimeter), das keinerlei Anteile von SiOH- beziehungsweise SiOR-Gruppen bezogen auf das ²⁹Si-NMR-spektroskopisch erfasste Gesamtsilizium aufweist.

## Patentansprüche

1. Mischungen zyklischer-verzweigter, ausschließlich D- und T-Einheiten aufweisender Siloxane mit der Maßgabe, dass der mit ²⁹Si-NMR-Spektroskopie bestimmbare summarische Anteil der in der Siloxanmatrix vorhandenen D- und T-Einheiten, die Si-Alkoxy- und/oder SiOH-Gruppen aufweisen, größer 2 und kleiner 10 Molprozent, vorzugsweise kleiner 9 Molprozent, ist.

2. Mischungen zyklischer-verzweigter, ausschließlich D- und T-Einheiten aufweisender Siloxane gemäß Anspruch 1, wobei das Verhältnis von D- zu T-Einheiten zwischen 10 : 1 und 3 : 1, bevorzugt zwischen 6 : 1 und 4 : 1 liegt.

3. Mischungen zyklischer-verzweigter, ausschließlich D- und T-Einheiten aufweisender Siloxane gemäß Anspruch 1 oder 2, wobei das Molmassenverhältnis der Mischung M_{w}/Mₙ im Bereich 2 < M_{w}/Mₙ < 50 liegt, M_{w}/Mₙ bestimmbar aus toluolischen Lösungen der Siloxane durch die Gel-Permeations-Chromatographie, die unter Nutzung eines Brechungsindex-Detektors im Abgleich gegen einen Polystyrol-Standard die Bestimmung von deren mittleren Molmasse M_{w} und deren Molmassenverteilung M_{w}/Mₙ gestattet.

4. Mischungen zyklischer-verzweigter, ausschließlich D- und T-Einheiten aufweisender Siloxane gemäß einem der Ansprüche 1 bis 3 wobei sich die verzweigende T-Einheit von Alkyltrialkoxysilanen und Phenyltrilkoxysilanen herleitet.

5. Mischungen zyklischer-verzweigter, ausschließlich D- und T-Einheiten aufweisender Siloxane gemäß einem der Ansprüche 1 bis 4 wobei sich die verzweigende T-Einheit von Methyltriethoxysilan herleitet.

6. Mischungen zyklischer-verzweigter, ausschließlich D- und T-Einheiten aufweisender Siloxane gemäß einem der Ansprüche 1 bis 5, gelöst in einem Silicium-haltigen Lösemittel, vorzugsweise in den isomeren Siloxancyclen Oktamethylcyclotetrasiloxan D₄, Dekamethylcyclotetrasiloxan D₅ und/oder deren Mischungen.

7. Verfahren zur Herstellung von Mischungen zyklischer-verzweigter, ausschließlich D- und T-Einheiten aufweisender Siloxane gemäß einem der Ansprüche 1 bis 5, umfassend
(a) eine sauer katalysierte Äquilibrierung von Trialkoxysilanen mit Siloxancyclen und/oder α,ω- Dihydroxy-polydimethylsiloxan in Anwesenheit von mindestens einem sauren Katalysator und danach
(b) eine durch Wasserzugabe eingeleitete Hydrolyse- und Kondensationsreaktion sowie Zugabe eines Silicium-haltigen Lösemittels, gefolgt von,
(c) einer destillativen Abtrennung des freigesetzten Alkohols, im System vorhandenen Wassers und Silicum-haltigen Lösemittels sowie einer Neutralisation oder Abtrennung des sauren Katalysators und ggf. Abtrennung womöglich gebildeter Salze,
wobei das Silicium-haltige Lösungsmittel die isomeren Siloxancyclen Oktamethylcyclotetrasiloxan (D₄), Dekamethylcyclotetrasiloxan (D₅) und/oder deren Mischungen umfasst, und vorteilhafterweise in Massenverhältnissen von Silicium-haltigem Lösemittel zum D- und T-Einheiten aufweisenden Siloxan von 1:1 bis 5:1 gearbeitet wird.

8. Verfahren nach Anspruch 7, **dadurch gekennzeichnet, dass** als saurer Katalysator para-Toluolsulfonsäure, Trifluormethansulfonsäure, Trichloressigsäure, Schwefelsäure, Perchlorsäure, Phosphorsäure und/oder Hexafluorphosphorsäure eingesetzt werden, vorzugsweise in Mengen von 0,1 bis 2,0 Gewichtsprozent, besonders bevorzugt in Mengen von 0,15 bis 1,0 Gewichtsprozent, jeweils bezogen auf den Silicium enthaltenden Anteil der Reaktionsmatrix.

9. Verfahren nach Anspruch 7, **dadurch gekennzeichnet, dass** als saurer Katalysator ein sulfonsaures, makrovernetztes lonenaustauscherharz eingesetzt wird, vorzugsweise in Mengen von 1,0 bis 10,0 Gewichtsprozent, besonders bevorzugt in Mengen von 2,0 bis 6,0 Gewichtsprozent jeweils bezogen auf den Silicium enthaltenden Anteil der Reaktionsmatrix.

10. Verfahren nach einem der Ansprüche 8 oder 9, **dadurch gekennzeichnet, dass** die Umsetzung bei Temperaturen im Bereich von 20°C bis 120°C, vorzugsweise von 40°C bis 110°C durchgeführt wird.

11. Verfahren nach einem der Ansprüche 7 bis 10, **dadurch gekennzeichnet, dass** ein mindestens 150%-iger H₂O-Überschuss bezogen auf die zu kondensierenden Gruppen eingesetzt wird.

12. Verfahren nach einem der Ansprüche 7 bis 11, **dadurch gekennzeichnet, dass** die Umsetzung einen Voräquilibrierschritt bei Temperaturen von T>40°C umfasst, gefolgt von einer durch Wasserzugabe eingeleiteten Kondensation bei Temperaturen von T>60°C, wobei die Wasserzugabe in einer Portion, in mehreren Portionen oder fortlaufend erfolgt.

13. Verfahren zur Herstellung verzweigter, organomodifizierter Siloxane, **dadurch gekennzeichnet, dass**
in einem ersten Schritt Mischungen zyklischer-verzweigter Siloxane bereitgestellt werden, gemäß einem der Ansprüche 1 bis 6,
und
in einem zweiten Schritt die Mischungen zyklischer-verzweigter Siloxane mit Silanen und/oder Siloxanen sauer äquilibriert werden.

14. Verfahren nach Anspruch 13, **dadurch gekennzeichnet, dass** als Silane und/oder Siloxane sauer äquilibrierbare Siliciumverbindungen eingesetzt werden,
wobei als Silane vorzugsweise Diethoxydimethylsilan, Trimethylalkoxysilane und/oder Dimethyldichlorsilan eingesetzt werden,
und/oder
wobei als Siloxane vorzugsweise Tetramethyldisiloxan, α,ω-Dihydrogen-polydimethylsiloxane, Poly(methylhydrogen)siloxane, a,-Dialkoxypolydimethylsiloxane und/oder α,ω-Divinylpoly-dimethylsiloxane eingesetzt werden.

15. Verfahren nach Anspruch 13 oder 14, **dadurch gekennzeichnet, dass** in dem zweiten Schritt, in welchem die Mischungen zyklischer-verzweigter Siloxane mit Silanen und/oder Siloxanen sauer äquilibriert werden,
a) eine Menge von ≥ 0,2 Gew.-% an saurem Katalysator, vorzugsweise Trifluormethansulfonsäure, eingesetzt wird,
b) durch das, vorzugsweise zeitlich befristete, Anlegen eines Hilfsvakuums im Äquilibrierschritt die Konzentration der zur Kondensation befähigten Gruppen absenkt wird, wobei das Hilfsvakuum vorzugsweise ≤ 200 mbar, bevorzugt ≤ 150 mbar beträgt und/oder
c) eine sequenzierte Zugabe des sauren Katalysators, vorzugsweise Trifluormethansulfonsäure, erfolgt, wobei die sequenzierte Zugabe bevorzugt in 2 Schritten erfolgt und/oder
d) die Schritte (b) und (c) kombiniert werden.

16. Verfahren nach Anspruch 13 oder 14, **dadurch gekennzeichnet, dass** in dem zweiten Schritt, in welchem die Mischungen zyklischer-verzweigter Siloxane mit Silanen und/oder Siloxanen sauer äquilibriert werden, die Äquilibrierung an einem wasserhaltigen, sulfonsauren, makroporösen Polystyrolharz vorgenommen wird, das vorzugsweise in Mengen von 3 bis 9 Gew.-% eingesetzt wird, und das vorzugsweise mit 8 bis 12 Gew.-% Wasser behaftet ist, und und dessen spezifische Oberfläche vorzugsweise ≥ 35 m²/g und dessen mittlerer Porendurchmesser vorzugsweise wenigstens 65 nm beträgt.

17. Verfahren zur Herstellung verzweigter Silikonöle, **dadurch gekennzeichnet, dass** in einem ersten Schritt zyklische-verzweigte Siloxane bereitgestellt werden, gemäß einem der Ansprüche 1 bis 6,
und in einem zweiten Schritt die zyklischen-verzweigten Siloxane mit Polydimethylsiloxanen oder Hexamethyldisiloxan umgesetzt werden.

## Claims

1. Mixtures of cyclic branched siloxanes having exclusively D and T units, with the proviso that the cumulative proportion of the D and T units having Si-alkoxy and/or SiOH groups that are present in the siloxane matrix, determinable by ²⁹Si NMR spectroscopy, is greater than 2 and less than 10 mole per cent, preferably less than 9 mole per cent.

2. Mixtures of cyclic branched siloxanes having exclusively D and T units according to Claim 1, wherein the ratio of D to T units is between 10:1 and 3:1, preferably between 6:1 and 4:1.

3. Mixtures of cyclic branched siloxanes having exclusively D and T units according to Claim 1 or 2, wherein the molar mass ratio of the mixture M_{w}/Mₙ is in the range of 2 < M_{w}/Mₙ < 50, M_{w}/Mₙ being determinable from toluenic solutions of the siloxanes by gel permeation chromatography (GPC), which, with utilization of a refractive index detector, by comparison with a polystyrene standard, permits the determination of the mean molar mass M_{w} thereof and the molar mass distribution M_{w}/Mₙ thereof.

4. Mixtures of cyclic branched siloxanes having exclusively D and T units according to any of Claims 1 to 3, wherein the branching T unit derives from alkyltrialkoxysilanes and phenyltrialkoxysilanes.

5. Mixtures of cyclic branched siloxanes having exclusively D and T units according to any of Claims 1 to 4, wherein the branching T unit derives from methyltriethoxysilane.

6. Mixtures of cyclic branched siloxanes having exclusively D and T units according to any of Claims 1 to 5, dissolved in a silicon-containing solvent, preferably in the isomeric siloxane cycles octamethylcyclotetrasiloxane D₄, decamethylcyclotetrasiloxane D₅ and/or mixtures thereof.

7. Process for preparing mixtures of cyclic branched siloxanes having exclusively D and T units according to any of Claims 1 to 5, comprising
(a) an acid-catalysed equilibration of trialkoxysilanes with siloxane cycles and/or α,ω-dihydroxypolydimethylsiloxane in the presence of at least one acidic catalyst and then
(b) a hydrolysis and condensation reaction initiated by addition of water, and addition of a silicon-containing solvent, followed by
(c) a distillative removal of the alcohol released, of water present in the system and of silicon-containing solvent, and a neutralization or removal of the acidic catalyst and optionally removal of salts that have possibly formed,
wherein the silicon-containing solvent comprises the isomeric siloxane cycles octamethylcyclotetrasiloxane (D₄), decamethylcyclotetrasiloxane (D₅) and/or mixtures thereof, advantageously working in mass ratios of silicon-containing solvent to the siloxane having D and T units of 1:1 to 5:1.

8. Process according to Claim 7, **characterized in that** the acidic catalyst used is para-toluenesulfonic acid, trifluoromethanesulfonic acid, trichloroacetic acid, sulfuric acid, perchloric acid, phosphoric acid and/or hexafluorophosphoric acid, preferably in amounts of 0.1 to 2.0 per cent by weight, more preferably in amounts of 0.15 to 1.0 per cent by weight, based in each case on the silicon-containing component of the reaction matrix.

9. Process according to Claim 7, **characterized in that** the acidic catalyst used is a macrocrosslinked ion exchange resin containing sulfonic acid groups, preferably in amounts of 1.0 to 10.0 per cent by weight, more preferably in amounts of 2.0 to 6.0 per cent by weight, based in each case on the silicon-containing component of the reaction matrix.

10. Process according to either of Claims 8 and 9, **characterized in that** the reaction is conducted at temperatures in the range from 20°C to 120°C, preferably from 40°C to 110°C.

11. Process according to any of Claims 7 to 10, **characterized in that** an at least 150% H₂O excess is used, based on the groups to be condensed.

12. Process according to any of Claims 7 to 11, **characterized in that** the reaction comprises a preliminary equilibration step at temperatures of T > 40°C, followed by a condensation initiated by addition of water at temperatures of T > 60°C, where the water is added in one portion, in several portions or continuously.

13. Process for preparing branched organomodified siloxanes, **characterized in that**
in a first step mixtures of cyclic branched siloxanes are provided, according to one of Claims 1 to 6, and
in a second step the mixtures of cyclic branched siloxanes are equilibrated under acidic conditions with silanes and/or siloxanes.

14. Process according to Claim 13, **characterized in that** the silanes and/or siloxanes used are acid-equilibratable silicon compounds,
wherein the silanes used are preferably diethoxydimethylsilane, trimethylalkoxysilanes and/or dimethyldichlorosilane,
and/or
wherein the siloxanes used are preferably tetramethyldisiloxane, α,ω-dihydropolydimethyl-siloxanes, poly(methylhydro)siloxanes, α,ω-dialkoxypolydimethylsiloxanes and/or α,ω-divinylpolydimethylsiloxanes.

15. Process according to Claim 13 or 14, **characterized in that**, in the second step in which the mixtures of cyclic branched siloxanes are acid-equilibrated with silanes and/or siloxanes,
a) an amount of ≥ 0.2% by weight of acidic catalyst, preferably trifluoromethanesulfonic acid, is used,
b) the preferably time-limited application of an auxiliary vacuum in the equilibration step lowers the concentration of the groups capable of condensation, where the auxiliary vacuum is preferably ≤ 200 mbar, preferably ≤ 150 mbar, and/or
c) there is sequenced addition of the acidic catalyst, preferably trifluoromethanesulfonic acid, the sequenced addition preferably being effected in 2 steps, and/or
d) steps (b) and (c) are combined.

16. Process according to Claim 13 or 14, **characterized in that**, in the second step in which the mixtures of cyclic branched siloxanes are acid-equilibrated with silanes and/or siloxanes, the equilibration is undertaken over a water-containing macroporous polystyrene resin containing sulfonic acid groups, which is preferably used in amounts of 3% to 9% by weight and which has preferably been wetted with 8% to 12% by weight of water, and the specific surface area of which is preferably ≥ 35 m²/g and the mean pore diameter of which is preferably at least 65 nm.

17. Process for preparing branched silicone oils, **characterized in that** in a first step cyclic branched siloxanes are provided, according to one of Claims 1 to 6,
and in a second step the cyclic branched siloxanes are reacted with polydimethylsiloxanes or hexamethyldisiloxane.

## Revendications

1. Mélanges de siloxanes cycliques-ramifiés, présentant exclusivement des motifs D et T, étant entendu que la proportion en somme qui peut être déterminée par spectroscopie RMN ²⁹Si des motifs D et T présents dans la matrice de siloxane, qui présentent des groupes Si-alcoxy et/ou SiOH, est supérieure à 2 et inférieure à 10 pour cent en moles, de préférence inférieure à 9 pour cent en moles.

2. Mélanges de siloxanes cycliques-ramifiés, présentant exclusivement des motifs D et T selon la revendication 1, le rapport des motifs D sur T se situant entre 10 : 1 et 3 : 1, préférablement entre 6 : 1 et 4 : 1.

3. Mélanges de siloxanes cycliques-ramifiés, présentant exclusivement des motifs D et T selon la revendication 1 ou 2, le rapport en masse molaire du mélange M_{w}/Mₙ se situant dans la plage de 2 < M_{w}/Mₙ < 50, M_{w}/Mₙ pouvant être déterminé avec des solutions dans le toluène des siloxanes par chromatographie à perméation de gel, qui permet la détermination de leur masse molaire en moyenne M_{w} et de leur distribution de masse molaire M_{w}/Mₙ par l'utilisation d'un détecteur d'indice de réfraction par comparaison avec une référence de polystyrène.

4. Mélanges de siloxanes cycliques-ramifiés, présentant exclusivement des motifs D et T selon l'une quelconque des revendications 1 à 3, le motif ramifiant T étant issu d'alkyltrialcoxysilanes et de phényltrialcoxysilanes.

5. Mélanges de siloxanes cycliques-ramifiés, présentant exclusivement des motifs D et T selon l'une quelconque des revendications 1 à 4, le motif ramifiant T étant issu du méthyltriéthoxysilane.

6. Mélanges de siloxanes cycliques-ramifiés, présentant exclusivement des motifs D et T selon l'une quelconque des revendications 1 à 5, dissous dans un solvant contenant du silicium, de préférence dans les siloxanes cycliques isomériques octaméthylcyclotétrasiloxane D₄, décaméthylcyclotétrasiloxane D₅ et/ou leurs mélanges.

7. Procédé pour la préparation de mélanges de siloxanes cycliques-ramifiés, présentant exclusivement des motifs D et T selon l'une quelconque des revendications 1 à 5, comprenant
(a) une équilibration catalysée par un acide de trialcoxysilanes avec des siloxanes cycliques et/ou un α,ω-dihydroxypolydiméthylsiloxane en présence d'au moins un catalyseur acide et ensuite
(b) une réaction d'hydrolyse et une réaction de condensation induites par l'ajout d'eau ainsi qu'un ajout d'un solvant contenant du silicium, suivis par
(c) une séparation par distillation de l'alcool libéré, de l'eau et du solvant contenant du silicium présents dans le système ainsi qu'une neutralisation ou une séparation du catalyseur acide et éventuellement une séparation de sels formés si possible,
le solvant contenant du silicium comprenant les siloxanes cycliques isomériques octaméthylcyclotétrasiloxane (D₄), décaméthylcyclotétrasiloxane (D₅) et/ou leurs mélanges, et dans lequel on utilise avantageusement les rapports en masse de solvant contenant du silicium sur le siloxane présentant des motifs D et T de 1 : 1 à 5 : 1.

8. Procédé selon la revendication 7, **caractérisé en ce qu'**en tant que catalyseur acide, l'acide paratoluènesulfonique, l'acide trifluorométhanesulfonique, l'acide trichloroacétique, l'acide sulfurique, l'acide perchlorique, l'acide phosphorique et/ou l'acide hexafluorophosphique sont utilisés, de préférence en des quantités de 0,1 à 2,0 pour cent en poids, particulièrement préférablement en des quantités de 0,15 à 1,0 pour cent en poids, à chaque fois par rapport à la partie de la matrice de réaction qui contient du silicium.

9. Procédé selon la revendication 7, **caractérisé en ce qu'**en tant que catalyseur acide, une résine échange d'ions macroréticulée, à acide sulfonique est utilisée, de préférence en des quantités de 1,0 à 10,0 pour cent en poids, particulièrement préférablement en des quantités de 2,0 à 6,0 pour cent en poids, à chaque fois par rapport à la partie de la matrice de réaction qui contient du silicium.

10. Procédé selon l'une quelconque des revendications 8 et 9, **caractérisé en ce que** la transformation est mise en œuvre à des températures dans la plage de 20 °C à 120 °C, de préférence de 40 °C à 110 °C.

11. Procédé selon l'une quelconque des revendications 7 à 10, **caractérisé en ce qu'**un excès d'H₂O d'au moins 150 %, par rapport aux groupes devant être condensés, est utilisé.

12. Procédé selon l'une quelconque des revendications 7 à 11, **caractérisé en ce que** la transformation comprend une étape de pré-équilibration à des températures de T > 40 °C, suivie par une condensation induite par un ajout d'eau à des températures de T > 60 °C, l'ajout d'eau étant réalisé en une portion, en plusieurs portions ou en continu.

13. Procédé pour la préparation de siloxanes ramifiés, organomodifiés, **caractérisé en ce que**
dans une première étape, des mélanges de siloxanes cycliques-ramifiés sont préparés, selon l'une quelconque des revendications 1 à 6,
et
dans une deuxième étape, les mélanges de siloxanes cycliques-ramifiés sont équilibrés de manière acide avec des silanes et/ou des siloxanes.

14. Procédé selon la revendication 13, **caractérisé en ce qu'**en tant que silanes et/ou siloxanes, des composés de silicium qui peuvent être équilibrés de manière acide sont utilisés,
le diéthoxydiméthylsilane, des triméthylalcoxysilanes et/ou le diméthyldichlorosilane sont de préférence utilisés en tant que silanes,
et/ou
le tétraméthyldisiloxane, des α,ω-dihydrogéno-polydiméthylsiloxanes, des poly(méthylhydrogéno)siloxanes, des α,ω-dialcoxypolydiméthylsiloxanes et/ou des α,ω-divinylpolydiméthylsiloxanes sont de préférence utilisés en tant que siloxanes.

15. Procédé selon la revendication 13 ou 14, **caractérisé en ce que** dans la deuxième étape, dans laquelle les mélanges de siloxanes cycliques-ramifiés sont équilibrés de manière acide avec des silanes et/ou des siloxanes,
a) une quantité de ≥ 0,2 % en poids d'un catalyseur acide, de préférence l'acide trifluorométhanesulfonique, est utilisée,
b) la concentration des groupes aptes à la condensation est diminuée par l'application d'un vide auxiliaire dans l'étape d'équilibration, de préférence limitée temporairement, le vide auxiliaire étant de préférence ≤ 200 mbars, préférablement ≤ 150 mbars et/ou
c) un ajout séquencé du catalyseur acide, de préférence l'acide trifluorométhanesulfonique, est réalisé, l'ajout séquencé étant réalisé préférablement en 2 étapes et/ou
d) les étapes (b) et (c) sont combinées.

16. Procédé selon la revendication 13 ou 14, **caractérisé en ce que** dans la deuxième étape, dans laquelle les mélanges de siloxanes cycliques-ramifiés sont équilibrés de manière acide avec des silanes et/ou des siloxanes, l'équilibration est effectuée sur une résine de polystyrène contenant de l'eau, à acide sulfonique, macroporeuse, qui est utilisée de préférence en des quantités de 3 à 9 % en poids, et qui est pourvue de préférence de 8 à 12 % en poids d'eau, et dont la surface spécifique est de préférence ≥ 35 m²/g et dont le diamètre moyen de pores est de préférence d'au moins 65 nm.

17. Procédé pour la préparation d'huiles de silicone ramifiées, **caractérisé en ce que** dans une première étape des siloxanes cycliques-ramifiés sont préparés, selon l'une quelconque des revendications 1 à 6,
et dans une deuxième étape les siloxanes cycliques-ramifiés sont transformés avec des polydiméthylsiloxanes ou de l'hexaméthyldisiloxane.
